# EUROPÄISCHE PATENTSCHRIFT

(11) **EP 1 768 877 B1**
(45) Veröffentlichungstag und Bekanntmachung des Hinweises auf die Patenterteilung: **12.12.2007**
(21) Anmeldenummer: 05726505.0
(22) Anmeldetag: 28.04.2005
(51) Int. Cl.: B60R 21/01

(54) **SICHERHEITSSYSTEM FÜR FAHRZEUGINSASSEN**
SAFETY SYSTEM FOR VEHICLE OCCUPANTS
SYSTEME DE SECURITE DESTINE A DES OCCUPANTS D'UN VEHICULE

(30) Priorität: 19.06.2004 DE 102004029817
(43) Veröffentlichungstag der Anmeldung: 04.04.2007
(73) Patentinhaber: ROBERT BOSCH GMBH, 70442 Stuttgart (DE)
(72) Erfinder: WILLIG, Rainer, 71732 Tamm (DE); KOCHER, Pascal, 70839 Gerlingen (DE); CADUFF, Urs, 71282 Hemmingen (DE); VERHAGEN, Armin, 71701 Schwieberdingen (DE); HUBER, Thomas, 71717 Beilstein (DE); SCHMID, Michael, 70806 Kornwestheim (DE); KROENINGER, Mario, 77815 Buehl (DE); HOENLE, Stephan, 70825 Korntal-Muenchingen (DE); BUNSE, Michael, 71665 Vaihingen/Enz (DE); NENNINGER, Gero, 71706 Markgroeningen (DE); MEHL, Volker, 76356 Weingarten (DE); HUBER, Joerg-Dieter, 71120 Grafenau (DE); KLEUKER, Ulf, 70839 Gerlingen (DE); PITTEROFF, Roland, 71706 Markgroeningen (DE); SCHIEBEL, Petra, 71638 Ludwigsburg (DE)
(86) Internationale Anmeldenummer: PCT/EP2005/051916
(87) Internationale Veröffentlichungsnummer: WO 2005/123462

(56) Entgegenhaltungen:
- EP-A- 1 247 699
- DE-A1- 10 020 084
- DE-A1- 10 149 112

## Beschreibung

### Stand der Technik

Die Erfindung betrifft ein Sicherheitssystem für Fahrzeuginsassen nach dem Oberbegriff des Anspruchs 1, sowie ein Verfahren für die Steuerung eines Sicherheitssystems nach dem Oberbegriff des Anspruchs 3.

Aus der gattungsbildenden DE 101 49 112 A1 ist es bekannt, die Auslösung eines Rückhaltesystems in Abhängigkeit von einem Schwimmwinkel, der Fahrzeugquergeschwindigkeit und des Fahrzeugkippwinkels vorzunehmen. Dabei sollen insbesondere Soil-Trip-Rollover Vorgänge behandelt werden. Die Fahrzeugquergeschwindigkeit wird aus der Fahrzeugeigengeschwindigkeit und dem Schwimmwinkel bestimmt und der Schwimmwinkel wiederum aus der Gierrate und der Lenkbewegung.

Aus EP 1247 699 A2 ist es bekannt, ein Verfahren zur Auslösung eines Insassenschutzsystems in Kraftfahrzeugen vorzusehen, wobei ein Schwellwert, der durch ein von Sensoren ausgehendes Freigabesignal für die Auslösung des Insassenschutzsystems übertroffen werden muss, fortlaufend und in Abhängigkeit von der gemessenen Fahrzeuggeschwindigkeit verändert bzw. angepasst wird.

Zurzeit werden für die Sensierung von Seitencrashs neben den in einem zentralen Airbagsteuergerät eingesetzten Beschleunigungssensoren vor allem periphere Beschleunigungs- oder Drucksensoren eingesetzt. Bei einem Seitenaufprall sind die Anforderungen an die Crashdetektion sehr hoch. Da der Abstand zwischen der Fahrzeugaußenseite und dem zu schützenden Fahrzeuginsassen sehr gering ist, muss die Entscheidung über Auslösung oder Nichtauslösung zum Beispiel der Seiten- oder Kopfairbags in sehr kurzer Zeit (z.B. 5-10 ms) getroffen werden, damit diese Rückhaltemittel noch eine Schutzwirkung entfalten können. Um eine hohe Robustheit des Systems gegenüber unerwünschten Auslösungen von Rückhaltemitteln zu erreichen, wird bei der Seitencrasherkennung auf Basis der Signale von peripheren Beschleunigungssensoren stets ein zusätzlicher, unabhängiger Plausibilisierungspfad verwendet. Üblicher Weise geschieht dies auf Basis des Beschleunigungssignals eines zweiten (z.B. auf dem Fahrzeugtunnel positionierten) Beschleunigungssensors. Aufgrund der heute in Fahrzeugen mit ESP (o.ä. Systemen) möglichen Erfassung von Fahrdynamikdaten, wie Querbeschleunigung, Gierrate, Lenkwinkel und Raddrehzahlen lässt sich eine Schätzung des Schwimmwinkels, wie auch der Längs- und Quergeschwindigkeit des Fahrzeugs bewerkstelligen. Diese Informationen werden auch zur Ansteuerung reversibler Rückhaltemittel, wie auch der Fensterheber, der Sitzverstellung und des Schiebedachs verwendet (Pre-Safe). Zur Ansteuerung irreversibler Rückhaltemittel reicht jedoch die Fahrdynamikinformation alleine nicht aus.

Aus DE 199 10 596 A1 sind ein Verfahren und eine Anordnung zur Auslösesteuerung von Rückhaltemitteln in einem Kraftfahrzeug bekannt, wobei vorgesehen ist, Ist-Werte der Fahrzeugbewegung zu erfassen und einen Auslösealgorithmus auf die erfassten Ist-Werte zum bedarfsweisen Erzeugen von Auslösesignalen für die Auslösung mindestens eines der Rückhaltemittel anzuwenden. Dabei sollen folgende Schritte durchgeführt werden: Erfassen von Ist-Werten der Fahrzeugbewegung, Bestimmen des dem gewünschten Fahrverhalten des Fahrzeugs entsprechenden Soll-Zustandes der Fahrzeugbewegung, Vergleichen eines aus mindestens einem Teil der erfassten Ist-Werte bestimmten Ist-Zustands der Fahrzeugbewegung mit dem entsprechenden Soll-Zustand, Parametrierung eines Auslösealgorithmus, der zur Generierung von Auslösesignalen eingesetzt wird, unter Berücksichtigung von Abweichungen zwischen Ist-Zustand und Soll-Zustand der Fahrzeugbewegung und Anwenden des Auslösealgorithmus auf mindestens einen Teil der erfassten Ist-Werte zum bedarfsweisen Erzeugen von situationsangepassten Auslösesignalen für die Auslösung mindestens eines der Rückhaltemittel.

Aus WO 90/09298 ist weiter ein Verfahren zur Auslösung von Rückhaltemitteln bei einem Sicherungssystem für Fahrzeuginsassen bekannt, bei dem ein Beschleunigungssignal gemessen, dieses Beschleunigungssignal durch zeitliche Integration in eine Geschwindigkeit umgewandelt, und bei dem zur Bildung eines Auslösekriteriums mindestens ein Schwellwert für die Geschwindigkeit vorgebbar ist. Bei diesem Verfahren ist weiterhin der als Auslösekriterium benutzte Schwellwert in Abhängigkeit von einer oder mehreren Zustandsgrößen oder von zeitlich zurückliegenden Zustandsgrößen des Fahrzeugs veränderbar.

### Vorteile der Erfindung

Die Erfindung bietet den Vorteil, dass, aufgrund der aus Fahrdynamikdaten vorliegenden Schätzung des Schwimmwinkels, der Längs- und der Quergeschwindigkeit (vL, vQ) die ungefähre Richtung, aus der ein Aufprall erwartet werden kann, ermittelbar ist. Für diesen Fall können, abgestimmt auf die jeweilige Fahrsituation, die Parameter zur Steuerung der jeweiligen Rückhaltemittel, insbesondere der pyrotechnischen Seiten- und Kopfairbags angepasst, bzw. ein Plausibilitätssignal für eine ggf. zu einem späteren Zeitpunkt erfolgende Crasherkennung des Airbagsteuergerätes zur Verfügung gestellt werden. Die Parameteranpassung (z.B. Senkung von Rauschschwellen) hat eine optimierte Erfassung des jeweilig wahrscheinlicheren Crashereignisses zum Ziel. Darüber hinaus kann durch die Schätzung der Quergeschwindigkeit auch eine Crashschwereerkennung verbessert werden, indem die zu erwartenden Signale der beschleunigungs- oder druckbasierten Crashsensierung mit den tatsächlich gemessenen Daten verglichen werden und eine korrespondierende Crashschwere vom abweichenden Verhalten in einem leichteren oder schwereren Crash unterschieden werden kann.

Ein besonders wichtiger Vorteil der Erfindung ist die Möglichkeit, die Steuerung der irreversiblen, pyrotechnischen Rückhaltemittel im Crash-Fall durch die gleichzeitige synergetische Nutzung von Fahrdynamikdaten und Daten der klassischen Seitencrashsensierung (Druck und Beschleunigung) zu optimieren. Insbesondere kann dadurch ein gefährlicher Crash früher erkannt werden. Dies bietet besonders bei einem Seitencrash einen Zeitvorteil, da aufgrund der kurzen Crashzone nur eine extrem kurze Reaktionszeit für die Aktivierung von Rückhaltemitteln zur Verfügung steht.

### Zeichnung

Die Erfindung wird nachfolgend unter Bezug auf die Zeichnung näher erläutert. Dabei zeigt
- Figur 1: ein Fahrzeug mit Darstellung verschiedener Vektoren,
- Figur 2: ein Blockschaltbild eines Sicherheitssystems,
- Figur 3: ein Ablaufdiagramm,
- Figur 4: ein Diagramm mit Darstellung der Quergeschwindigkeit und des Ausgangssignals eines Seitencrashsensors.

### Beschreibung der Ausführungsbeispiele

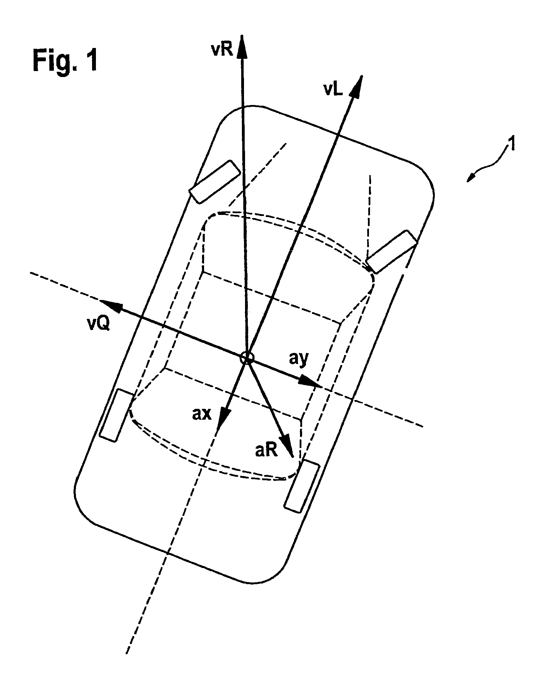

Figur 1 zeigt zunächst, in schematischer Darstellung, ein Fahrzeug 1 mit mehreren Vektoren in einem Koordinatensystem. Eingezeichnet sind die Beschleunigungskomponenten in X- und Y-Richtung, ax bzw. ay, sowie die resultierende Beschleunigung aR. Weiterhin sind die Geschwindigkeitskomponenten in Längs- und Querrichtung des Fahrzeugs 1, vL, vQ, sowie die resultierende Geschwindigkeit vR, dargestellt. Hier handelt es sich beispielsweise um ein seitlich ausgebrochenes Fahrzeug in einem sehr instabilen Fahrzustand. Die Erfindung nutzt insbesondere die Geschwindigkeitskomponente vQ in Querrichtung für die beabsichtigte Optimierung der Auslöseentscheidung von Rückhaltemitteln.

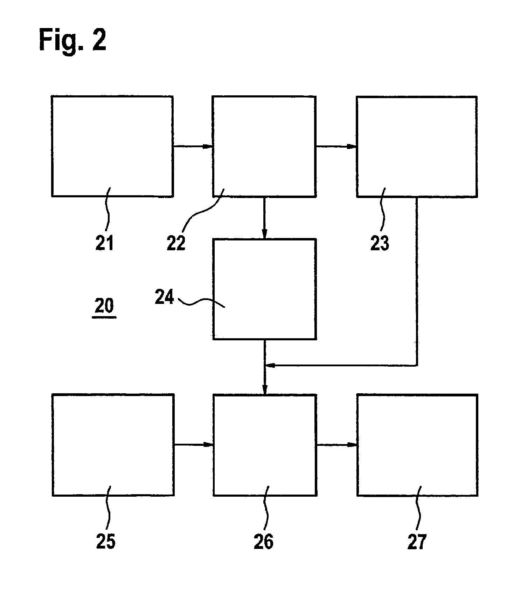

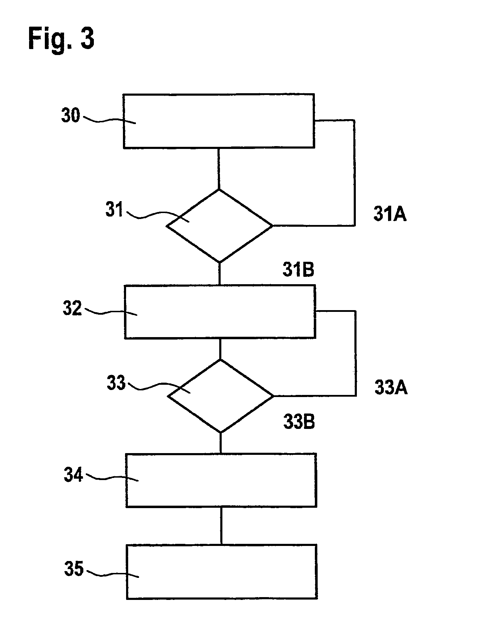

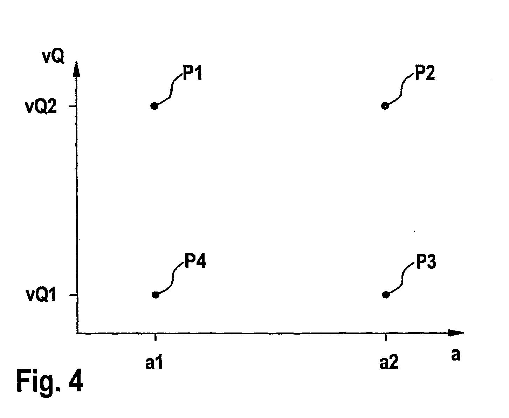

In Figur 2 ist das Blockschaltbild eines Sicherheitssystems 20 dargestellt. Das Sicherheitssystem 20 umfasst mehrere Funktionsmodule 21, 22, 23, 24, 25, 26, 27. Ein erstes Funktionsmodul 21 mit zugeordneten, aber hier im Einzelnen nicht dargestellten Sensoren dient der Erfassung von später noch erläuterten Zustandsgrößen des Fahrzeugs 1. Dieses Funktionsmodul 21 ist mit einem zweiten Funktionsmodul 22 verbunden. Das Funktionsmodul 22 ist mit einem Funktionsmodul 23 und einem weiteren Funktionsmodul 24 verbunden. Das Funktionsmodul 24 ist mit einem weiteren Funktionsmodul 26 verbunden. Das Funktionsmodul 23 ist ebenfalls mit dem Funktionsmodul 26 verbunden. Das Funktionsmodul 26 ist einerseits mit dem Funktionsmodul 25 und andererseits mit dem Funktionsmodul 27 verbunden. Im Folgenden wird die Funktionsweise des in Figur 2 dargestellten Sicherheitssystems, auch unter Bezug auf das in Figur 3 dargestellte Ablaufdiagramm und das in Figur 4 dargestellte Diagramm, erläutert.

Das erste Funktionsmodul 21 mit zugeordneten, aber hier im Einzelnen nicht dargestellten Sensoren dient der Erfassung von Fahrdynamikdaten. Mit entsprechenden Sensoren werden so insbesondere Werte von Raddrehzahl, Bremsdruck und Drehmoment des Fahrzeugs 1 erfasst. Ein weiteres Funktionsmodul 22 mit Steuergerätefunktion empfängt diese Fahrdynamikdaten und leitet diese Daten, wenigstens teilweise, unverändert, als Rohdaten, an das Funktionsmodul 24 weiter. Zum anderen verarbeitet das Funktionsmodul 22 wenigstens einen Teilbereich der von dem Funktionsmodul 21 empfangenen Daten und berechnet daraus beispielsweise Richtungsinformationen, Längs- und Quergeschwindigkeit des Fahrzeugs, sowie den Schwimmwinkel des Fahrzeugs. Diese Ergebnisse werden an das Funktionsmodul 23 weitergeleitet. An dem Ausgang des Funktionsmoduls 24 stehen auf diese Weise einerseits die von dem Funktionsmodul 22 weitergeleiteten Rohdaten und zusätzlich die von dem Funktionsmodul 22 aus diesen Rohdaten berechneten Größen zur Verfügung, die insgesamt an das Funktionsmodul 26 weitergeleitet werden. Mit dem Funktionsmodul 25 werden Beschleunigungskomponenten ax,ay,az aus drei Achsen, Beschleunigungskomponenten ayl, ayr der Seitenaufprallsensoren (PAS), sowie Signale von Drehratensensoren erfasst und an das Funktionsmodul 26 weitergeleitet. In dem Funktionsmodul 26 werden aus diesen Eingangsdaten Steuersignale für die schematisch in dem Funktionsmodul 27 zusammengefassten Rückhaltemittel, wie Airbag, Seitenairbag, Kopfairbags, Windowairbags, sowie Gurtstraffer abgeleitet. Das System 20 ermittelt aus den unterschiedlichen zur Beurteilung der Fahrdynamik gemessenen Daten die Schätzgrößen Schwimmwinkel, sowie die Längs- und die Quergeschwindigkeit. Überschreitet zum Beispiel die im normalen Fahrzustand geringe Quergeschwindigkeit vQ eine gewisse Grenze, oder wird durch Beobachtung der Fahrdynamikdaten auf andere Weise ein von dem Normalzustand abweichender Fahrzustand erkannt, bei dem ein erhöhtes Risiko für einen seitlichen Aufprall auf ein Hindernis besteht, werden die entsprechenden Informationen zu dem Funktionsmodul 26 übertragen. Alternativ dazu kann die Erkennung des erhöhten Crashrisikos auch durch das Funktionsmodul 26 mit Hilfe von Sensordaten erfolgen, die ihm von einem Fahrdynamikanalysesystem (z.B. über einen Datenbus) zur Verfügung gestellt werden. In dem Funktionsmodul 26 wird nun durch eine Anpassung der algorithmischen Parameter die Information über die erhöhte Wahrscheinlichkeit eines bestimmten Crashereignisses genutzt, um eine frühzeitige Plausibilisierung und ggf. sogar Auslösung der für diesen Crash relevanten Rückhaltemittel zu ermöglichen. Liegt aus den Fahrdynamikdaten, eventuell unter zusätzlicher Verwendung von Beschleunigungsdaten aus dem Funktionsmodul 26, eine zuverlässige Schätzung der Quer- und der Längsgeschwindigkeit vor, kann diese vorteilhaft als zusätzliche Information zur Crashschwereerkennung dienen. In vielen Fällen, bei denen ein instabiler Fahrzustand (z.B. seitliches Ausbrechen, Schleudern) einem Crashereignis vorausgeht (siehe beispielsweise die Darstellung des Fahrzeugs 1 in Figur 1), handelt es sich um eine Kollision mit einem stehenden Objekt, oder um eine Kollision mit einem Objekt mit vergleichsweise geringer Geschwindigkeit, so dass die Längs- und die Quergeschwindigkeit eng mit der relativen Aufprallgeschwindigkeit korrelieren. Somit kann beispielsweise diese Information, insbesondere in einer frühen Crashphase, in Verbindung mit den Beschleunigungs- und/oder Drucksignalen, zur Erkennung der Crashschwere, genutzt werden. Bei einem seitlichen Aufprall mit bestimmter Geschwindigkeit auf ein festes Hindernis ist ein bestimmter Verlauf der Beschleunigungs- und/oder Druckdaten zu erwarten. Weicht der Verlauf der gemessenen Daten von den erwarteten Daten ab, kann ein leichterer oder schwererer Crash unterschieden werden und die Steuerung der Rückhaltemittel dementsprechend angepasst werden.

Die mit der Erfindung erzielbaren Vorteile lassen sich anhand der folgenden Beispiele herausstellen. In einem ersten Beispielsfall prallt das von der Fahrbahn abgekommene Fahrzeug 1 mit hoher Quergeschwindigkeit vQ2 (Figur 4) auf ein massives Hindernis, wie beispielsweise einen Baum. Die dabei auftretenden großen Ausgangssignale a2 der Druck- und Beschleunigungssensoren, in Verbindung mit der erfassten hohen Quergeschwindigkeit vQ2 (Diagrammpunkt P2), deuten unmissverständlich auf ein die Insassen massiv gefährdendes Crashereignis hin. Steuerbefehle für die Aktivierung der Rückhaltemittel 27 können auf diese Weise frühzeitig generiert werden. Dadurch kann, insbesondere bei einem Seitenaufprall wertvolle Zeit gewonnen werden, weil hier nur eine vergleichsweise kurze Crashzone zur Verfügung steht. In einem zweiten Beispielsfall prallt das Fahrzeug 1 mit hoher Quergeschwindigkeit vQ2 auf ein leichtes Hindernis, wie beispielsweise eine leere Mülltonne. Da bei diesem Beispielsfall wesentlich geringere Ausgangssignale a1 (Diagrammpunkt P1 in Figur 4) der Druck- und Beschleunigungssensoren auftreten, wird ein derartiger Aufprall als unkritisch eingestuft. Die Auslösung von Rückhaltemitteln wird vermieden. In einem dritten Beispielsfall prallt das Fahrzeug mit relativ niedriger Quergeschwindigkeit vQ1 auf ein massives Hindernis wie beispielsweise einen Baum. Auch in diesem Fall ist mit vergleichsweise hohen Ausgangssignalen a2 (Diagrammpunkt P3 in Figur 4) von Druck- und Beschleunigungssensoren zu rechnen. Die Auslösung von Rückhaltemitteln kann rechtzeitig erfolgen. Zumindest kann aber die Auslösung von Rückhaltemitteln durch Plausibilisierung und/oder Anpassung von Auslöseschwellwerten so vorbereitet werden, dass im Bedarfsfall eine schnelle Aktivierung von Rückhaltemitteln erfolgen kann. In einem vierten Beispielsfall schließlich prallt das Fahrzeug 1 mit relativ niedriger Quergeschwindigkeit vQ1 auf eine leere Mülltonne. Auch dabei ist mit relativ niedrigen Ausgangssignalen a1 von Druck- und Beschleunigungssensoren zu rechnen (Diagrammpunkt P4 in Figur 4). Dieser Fall stellt für die Insassen des Fahrzeugs 1 keine Gefahr dar. Eine Auslösung von Rückhaltemitteln wird daher unterdrückt.

## Patentansprüche

1. Sicherheitssystem (20) für Insassen eines Fahrzeugs (1), wobei das Sicherheitssystem (20) Mittel für die Erfassung der Quergeschwindigkeit (vQ) des Fahrzeugs (1) aufweist, und wobei mittels der erfassten Quergeschwindigkeit (vQ) die Steuerung der Rückhaltemittel des Sicherheitssystems (20)beeinflussbar ist, **dadurch gekennzeichnet, dass** das Sicherheitssystem mit Beschleunigungs- und/oder Drucksensoren für die Seitenaufprallsensierung versehen ist, dass aufgrund einer aus Fahrdynamikdaten vorliegenden Schätzung eines Schwimmwinkels, einer Längs- und der Quergeschwindigkit (vL, vQ) eine ungefähre Richtung, aus der ein Aufprall erwartet werden kann, ermittelbar ist, dass mit der ungefähren Richtung abgestimmt auf die jeweilige Fahrsituation Parameter zur Steuerung der Rückhaltemittel oder ein Plausibilitätssignal für eine Crasherkennung eines Airbagsteuergeräts zur Verfügung stellbar sind.

2. Sicherheitssystem nach Anspruch 1, **dadurch gekennzeichnet, dass** Mittel für den Vergleich der erfassten Quergeschwindigkeit (vQ) mit einem vorgebbaren Grenzwert der Quergeschwindigkeit (vQ) vorgesehen sind.

3. Verfahren für die Steuerung eines Sicherheitssystems (20) für Fahrzeuginsassen eines Fahrzeugs (1), wobei eine Quergeschwindigkeit (vQ) des Fahrzeugs (1) erfasst wird, **dadurch gekennzeichnet dass** für die Seitencrashsensierung Beschleunigungs- und/oder Drucksensoren verwendet werden, dass in Abhängigkeit von den Ausgangssignalen der Seitencrashsensierung und der erfassten Quergeschwindigkeit ein Sicherheitssystem (20) gesteuert wird, dass aufgrund einer aus Fahrdynamikdaten vorliegenden Schätzung eines Schwimmwinkels, einer Längs- und der Quergeschwindigkeit (vL, vQ) eine ungefähre Richtung, aus der ein Aufprall erwartet werden kann, ermittelt wird, dass damit abgestimmt auf eine jeweilige Fahrsituation Parameter zur Steuerung der Rückhaltemittel oder ein Plausibilitätssignal für eine Crasherkennung eines Airbagsteuergeräts zur Verfügung gestellt werden.

4. Verfahren nach Anspruch 3, **dadurch gekennzeichnet, dass** bei einem hohen Messwert der Seitencrashsensierung und einem niedrigen Messwert der Quergeschwindigkeit (vQ), Rückhaltemittel des Sicherheitssystem (20) für die Auslösung vorbereitet oder ausgelöst werden.

5. Verfahren nach einem der Ansprüche 3 oder 4, **dadurch gekennzeichnet, dass** bei einem hohen Messwert der Seitencrashsensierung und einem niedrigen Messwert der Quergeschwindigkeit (vQ) ein Auslösealgorithmus des Sicherheitssystems (20) in Richtung auf eine höhere Auslöseempfindlichkeit parametriert wird.

## Claims

1. Safety system (20) for occupants of a vehicle (1), wherein the safety system (20) has means for sensing the lateral speed (vQ) of the vehicle (1), and wherein the control of the restraint means of the safety system (20) can be influenced by means of the sensed lateral speed (vQ), **characterized in that** the safety system is provided with acceleration sensors and/or pressure sensors for the sensing of lateral impacts, **in that** an approximate direction from which an impact can be expected can be determined from an estimation, on the basis of vehicle movement dynamics data, of an attitude angle, of a longitudinal speed (vL) and of the lateral speed (vQ), **in that** parameters for controlling the restraint means or a plausibility signal for a crash detection of an airbag control device can be made available with the approximate direction matched to the respective driving situation.

2. Safety system according to Claim 1, **characterized in that** means for comparing the sensed lateral speed (vQ) with a predefinable limiting value of the lateral speed (vQ) are provided.

3. Method for controlling a safety system (20) for vehicle occupants of a vehicle (1), wherein a lateral speed (vQ) of the vehicle (1) is sensed, **characterized in that** acceleration sensors and/or pressure sensors are used for sensing the side impact, **in that** a safety system (20) is controlled as a function of the output signals for the sensing of the side impact and the sensed lateral speed, **in that** an approximate direction from which an impact can be expected is determined from an estimation, on the basis of vehicle movement dynamics data, of an attitude angle, of a longitudinal speed (vL) and of the lateral speed (vQ), and **in that** parameters for controlling the restraint means or a plausibility signal for a crash detection of an airbag control device are made available matched in this way to a respective driving situation.

4. Method according to Claim 3, **characterized in that** when there is a high measured value of the sensing of the side impact and a low measured value of the lateral speed (vQ), restraint means for the safety system (20) are prepared for triggering or are triggered.

5. Method according to one of Claims 3 or 4,
**characterized in that** when there is a high measured value of the sensing of the side impact and a low measured value of the lateral speed (vQ) a triggering algorithm of the safety system (20) is parameterized in the direction of a relatively high triggering sensitivity.

## Revendications

1. Système de sécurité 20 pour les passagers d'un véhicule 1,
le système 20 comportant des moyens pour saisir la vitesse transversale vQ du véhicule 1 pour influencer à l'aide de la vitesse transversale vQ, saisie, la commande des moyens de retenue du système de sécurité 20, **caractérisé en ce que**
le système de sécurité est muni de capteurs d'accélération et/ou de pression pour détecter un choc latéral,
et partant d'une évaluation de l'angle de flottement à partir des données de la dynamique de roulage, existant, de la vitesse longitudinale et de la vitesse transversale (vL, vQ) on détermine une direction approximative dans laquelle un choc est prévisible,
et avec la direction approximative on détermine selon la situation de roulage respective, les paramètres pour commander les moyens de retenue ou on fournit un signal de plausibilité pour une détection de collision d'un appareil de commande de coussin gonflable.

2. Système de sécurité selon la revendication 1,
**caractérisé par**
des moyens pour comparer la vitesse transversale saisie vQ et une valeur limite prédéfinie de la vitesse transversale vQ.

3. Procédé de commande d'un système de sécurité 20 pour les passagers d'un véhicule 1 selon lequel on saisit une vitesse transversale vQ du véhicule 1,
**caractérisé en ce que**
on utilise des capteurs d'accélération et/ou de pression pour détecter la collision latérale,
en fonction des signaux de sortie de la détection de collision latérale et de la vitesse transversale saisie, on commande un système de sécurité 20,
en fonction d'une évaluation faite à partir des données de la dynamique de roulage pour un manque de flottement, une vitesse longitudinale et une vitesse transversale vL, vQ, on détermine une direction prévisible dans laquelle un choc peut se produire, pour qu'ensuite et en fonction de la situation de roulage respective on fournit des paramètres pour commander les moyens de retenue ou un signal de plausibilité pour une détection de collision d'un appareil de commande de coussins gonflables.

4. Procédé selon la revendication 3,
**caractérisé en ce que**
pour une valeur de mesure élevée de la détection de collision latérale et une valeur de mesure faible de la vitesse transversale vQ, on prépare le déclenchement ou on déclenche les moyens de retenue du système de sécurité 20.

5. Procédé selon l'une des revendications 3 ou 4,
**caractérisé en ce que**
pour une valeur de mesure élevée de la détection de collision latérale et une valeur de mesure faible de la vitesse transversale vQ, on paramètre un algorithme de déclenchement du système de sécurité 20 dans le sens d'une plus grande sensibilité de déclenchement.
